# EUROPEAN PATENT APPLICATION

(11) **EP 4 604 285 A1**
(43) Date of publication of application: **20.08.2025**
(21) Application number: 24207360.9
(22) Date of filing: 18.10.2024
(51) Int. Cl.: H01M 50/172, H01M 50/186, H01M 50/533, H01M 50/566, H01M 50/15, H01M 50/148, H01M 50/176, H01M 50/184, H01M 50/188, H01M 50/54, H01M 50/548, H01M 50/557

(54) **SECONDARY BATTERY AND METHOD OF MANUFACTURING A SECONDARY BATTERY**

(30) Priority: 19.02.2024 KR 20240023747
(71) Applicant: SAMSUNG SDI CO., LTD., Yongin-si, Gyeonggi-do 17084 (KR)
(72) Inventor: Hwang, Youngjin, 17084 Yongin-Si, Gyeonggi-do (KR); Heo, Youngjin, 17084 Yongin-si, Gyeonggi-do (KR); Jeong, Myungha, 17084 Yongin-si, Gyeonggi-do (KR); Ji, Hyeongwoo, 17084 Yongin-si, Gyeonggi-do (KR); Baek, Soomin, 17084 Yongin-si, Gyeonggi-do (KR); Kim, Sangwon, 17084 Yongin-si, Gyeonggi-do (KR)
(74) Representative: Gulde & Partner

(57) **Abstract**

A secondary battery (100) includes a subplate (110) connected at a first end to a plurality of tabs (162) of an electrode (160) assembly, an insulator (120) coupled to the subplate (110), and a cap plate (130) configured to receive a bottom portion of the insulator (120), wherein the subplate (110) extends through the insulator (120) and the cap plate (130) to expose a second end of the subplate (110) is exposed to outside of the secondary battery (100).

## Description

### BACKGROUND

### 1. Field

The present disclosure relates to secondary batteries and methods of manufacturing the secondary batteries.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Among secondary batteries, a side terminal cell has a cell structure in which positive and negative terminals are positioned on opposite sides of a secondary battery. Each of such side terminal cells may include electrode assemblies, subtabs, current collectors, rivets, terminal plates, and the like. One problem, however, is that each of these components may have a unique resistance, and as the number of components increases, the performance of the cell may decrease as the component resistance increases.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes.

Embodiments of the present disclosure provide a secondary battery and method of manufacturing same.

These and other aspects and features of the present disclosure will be described in or will be apparent from the following description of embodiments of the present disclosure.

According to one or more embodiments, a secondary battery includes a subplate connected at a first end of the subplate to a plurality of tabs of an electrode assembly, an insulator coupled to the subplate, and a cap plate configured to receive a bottom portion of the insulator, wherein the subplate extends through the insulator and the cap plate to expose a second end of the subplate to outside of the secondary battery.

In other words, the composite of the insulator and the cap plate may have two sides, wherein on one side the first end of the subplate connected to the plurality of tabs of the electrode assembly is disposed and wherein on the other side the second end of the subplate outside of the secondary battery is disposed.

The first end of the subplate may be accommodated inside a case or housing of the secondary battery while the second end may be disposed outside of the housing.

A portion between the first end and the second end may connect both ends to each other. The portion or at least a part of the portion may extend through the insulator and the cap plate such that the insulator and the cap plate surround the portion or at least part of the portion.

According to some embodiments, the subplate may have the shape of a plate. The plate may be rectangular.

According to some embodiments, a side of the subplate may have a thickness of 0.5 mm to 1.0 mm. A side of the subplate may have a thickness of 0.7 mm to 0.8 mm. In other words, a cross-section of the subplate may have the mentioned thickness. The thickness therefore may refer to a thickness measured in a direction perpendicular to a longest extension of the subplate.

According to some embodiments, the thickness of the subplate may be constant.

According to some embodiments, the thickness of the subplate may be varying. In other words, the subplate may have at least two different thicknesses. The thickness may decrease from the first end to the second end or vice versa. This can ensure sufficient material thicknesses for stability and a reliable electrical connection at appropriate points and reduce material and space requirements at other points. The thickness may also be less between the first end and the second end than at either end. The thickness may also be greater between the first end and the second end than at either end.

According to some embodiments, the tabs of the electrode assembly may be electrically connected to the subplate by laser welding or ultrasonic welding. In other words, the connection between the plurality of tabs and the first end of the subplate is a laser welded joint or an ultrasonic welded joint.

According to some embodiments, the tabs of the electrode assembly may be connected to a front surface and a rear surface of the subplate. In other words, the front surface and the rear surface may face in different directions. They may be arranged opposite each other and point in opposite directions. The directions in which they point may correspond to the direction in which the thickness is measured and therefore in a direction perpendicular to a longest extension of the subplate.

According to some embodiments, the cap plate may include a cap plate through-hole through which the subplate extends.

A through hole within the present disclosure may have various shapes. In other words, a cross-section of the through hole perpendicular to the direction in which the through-hole extends may have various shapes. The through hole may be rectangular, triangular, circular or polygonal or may have other shapes.

According to some embodiments, the insulator may include an insulator through-hole through which the subplate extends.

According to some embodiments, a lower surface of the insulator may be coupled to an upper surface of the cap plate, and an inner surface of the insulator through-hole may be coupled to an intermediate portion of the subplate. The bottom portion of the insulator may include the lower surface of the insulator. The lower surface and the upper surface may face each other. In other words, they may be disposed opposite each other. The intermediate portion may be a part of the subplate which extends through the insulator and the cap plate and which may be surrounded by them. In other words, the inner surface of the insulator may contact the intermediate portion or an outer surface of the intermediate portion of the subplate.

According to some embodiments, the secondary battery may further include a sealing part positioned between the subplate and the cap plate. A first surface of the sealing part may contact and/or face the subplate and a second surface different from the first surface of the sealing part may contact and/or face the cap plate. The second surface may be opposite to the first surface.

According to some embodiments, the sealing part may include a sealing part through-hole through which the subplate extends.

According to some embodiments, an inner surface of the sealing part through-hole may be coupled to an intermediate portion of the subplate. In other words, the inner surface of the sealing part may contact the intermediate portion or an outer surface of the intermediate portion of the subplate.

According to some embodiments, the sealing part or an outer surface of the sealing part may be coupled to an inner surface of the cap plate through-hole of the cap plate.

According to some embodiments, a lower surface of the insulator may be coupled to an upper surface of the sealing part.

According to some embodiments, the sealing part may include a sealing portion, wherein the sealing portion may include a through-hole through which the subplate extends, a base and a protrusion projecting upwardly from the base.

According to some embodiments, the base and the protrusion may form a stepped portion. The through-hole of the sealing part may be formed continuously to penetrate the base and the protrusion together.

According to some embodiments, a lower surface of the cap plate may be coupled to a top surface of the base of the sealing portion.

According to some embodiments, a bottom surface or lower surface of the insulator may be coupled to a top surface of the cap plate and to a top surface of the protrusion of the sealing portion.

According to some embodiments, at least a portion of the cap plate may be recessed. A first portion of the cap plate may be inwardly recessed. A second portion of the cap plate may be non-recessed. A bottom surface or lower surface of the bottom portion of the insulator may be coupled to a top surface of the first portion of the cap plate. The bottom surface may be part of the lower surface of the insulator and the top surface may be part of the upper surface of the cap plate.

According to some embodiments, an area and/or a form of the top surface of the first portion of the cap plate may be the same as or substantially similar to an area and/or a form of the bottom surface of the insulator.

According to some embodiments, at least a portion of the lower surface of the insulator may be in contact with at least a portion of the cap plate.

According to some embodiments, the subplate may form a press fit connection with the through-hole of the cap plate, with the sealing part through- and/or the through-hole of the insulator.

According to some embodiments, the second end of the subplate may be positioned higher than a top surface of the insulator. In other words, the second end of the subplate may form a protrusion or overhang with regard to the insulator. In other words, with respect to an auxiliary plane extending at least partially in the insulator or may be formed by the insulator, the second end may protrude with respect to this auxiliary plane.

According to some embodiments, the secondary battery may further include a sealing part positioned between the subplate and the cap plate and a case configured to receive the electrode assembly, the case including a first open area and a second open area opposite the first open area, wherein the cap plate includes a first cap plate disposed over the first open area and a second cap plate disposed over the second open area. In other words, the case may include a first cavity and a second cavity, each located at different ends of the case. Further, the cap plate may include a first cap plate and a second cap plate which may be identically formed and may correspond to the cap plate according to the invention. The first cap plate may cover the first open area on a first end or side of the secondary battery, and the second cap plate may cover the second open area on a second end or side of the secondary battery.

According to some embodiments, the subplate may include a first subplate comprising a first end and a second end, the first subplate corresponding to a positive electrode, and a second subplate comprising a first end and a second end, the second subplate corresponding to a negative electrode, and a first end the first subplate may be connected to corresponding tabs of the tabs of the electrode assembly and the second subplate is connected to corresponding tabs of the tabs of the electrode assembly. In other words, the sub plate may include a first subplate and a second subplate, each connected to different tabs of the electrode assembly. The first subplate and the second subplate may be identically formed and may correspond to the subplate according to the invention.

According to some embodiments, a second end of the first subplate may be exposed to outside of the secondary battery and the first subplate may extend through a first insulator that is received in the first cap plate, and a second end of the second subplate may be exposed to outside of the secondary battery and the second subplate may extend through a second insulator that is received in the second cap plate. In other words, the insulator may include a first insulator and a second insulator, each coupled to the corresponding first or second subplate. The first insulator and the second insulator may be identically formed and may correspond to the insulator according to the invention. The first cap plate may be configured to receive a bottom portion of the first insulator and the second cap plate may be configured to receive a bottom portion of the second insulator.

A method of manufacturing a secondary battery of the present disclosure includes connecting a plurality of tabs of an electrode assembly to a first end of a subplate, coupling the subplate to a cap plate such that the subplate extends through a cap plate through-hole of the cap plate, coupling an insulator to an upper portion of the cap plate and coupling a case receiving the electrode assembly to the cap plate.

According to some embodiments, the connecting of the tabs of the electrode assembly to the first end of the subplate may include welding the tabs of the electrode assembly to a front surface and a rear surface of the subplate.

According to some embodiments, the method may further include before coupling the subplate to the cap plate, disposing a sealing part around an intermediate portion of the subplate.

According to some embodiments, coupling the insulator may include coupling the insulator to a recessed first portion of the cap plate by an injection process. First and second molds including an internal hollow space corresponding to the insulator may be fixed to a non-recessed second portion of the cap plate. The molds may include a through-hole through which the subplate can extend. The insulator may be coupled to a top surface of the first portion of the cap plate and a top surface of the sealing part using the molds by an injection process. Subsequently, the first mold and the second mold may be separated and removed in opposite directions.

According to some embodiments, coupling the subplate and the cap plate may include coupling the cap plate to an outer surface of a protrusion of the sealing part.

According to some embodiments, coupling of the insulator to the upper portion of the cap plate may include coupling a lower surface of the insulator to an upper surface of the cap plate, and coupling an inner surface of an insulator through-hole of the insulator through which the subplate extends to an intermediate portion of the subplate.

According to some embodiments, a second end of the subplate may be positioned higher than a top surface of the insulator.

A method of manufacturing a secondary battery of the present disclosure may include connecting a plurality of first tabs of an electrode assembly to a first end of a first subplate, connecting a plurality of second tabs of the electrode assembly to a first end of a second subplate that is opposite the first subplate, coupling the first subplate and a first cap plate such that the first subplate extends through a through-hole of the first cap plate, coupling a first insulator to an upper portion of the first cap plate, coupling a first area of a case that receives the electrode assembly to the first cap plate, coupling the second subplate to a second cap plate such that the second subplate extends through a through-hole of the second cap plate, coupling a second insulator to an upper portion of the second cap plate, and coupling a second area of the case that is opposite the first area to the second cap plate.

According to some embodiments of the present disclosure, when compared to conventional side terminal cells, components such as terminal plates, rivets, current collectors, sub-tabs, etc. may be eliminated. Accordingly, the resistance of the components may also be reduced, which may improve the performance of the secondary battery.

According to some embodiments of the present disclosure, the cost of manufacturing the secondary battery may be reduced as the number of components for manufacturing the secondary battery is reduced by simplifying the components within the secondary battery. In addition, the productivity of the secondary battery may be improved because the process of welding the current collector and the sub-tabs is not necessary.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective diagram showing a secondary battery according to embodiments of the present disclosure.
FIG. 2 illustrates a side diagram of the secondary battery according to embodiments of the present disclosure.
FIG. 3 illustrates a front diagram of the secondary battery according to embodiments of the present disclosure.
FIG. 4 illustrates a plan diagram of the secondary battery according to embodiments of the present disclosure.
FIG. 5 illustrates an A-A cross-section of FIG. 2.
FIG. 6 illustrates a B-B cross-section of FIG. 4.
FIG. 7 illustrates an example of coupling the insulator of the secondary battery according to embodiments of the present disclosure.
FIG. 8 illustrates an example of molds used in the coupling of the insulator.
FIG. 9 illustrates a flowchart showing an example of a method of manufacturing a secondary battery according to embodiments of the present disclosure.
FIGS. 10 to 15 illustrate schematic diagrams showing example steps of the secondary battery manufacturing method.

### DETAILED DESCRIPTION OF THE EMBODIMENTS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

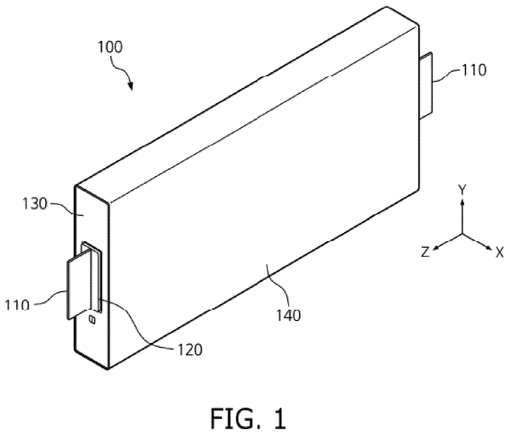

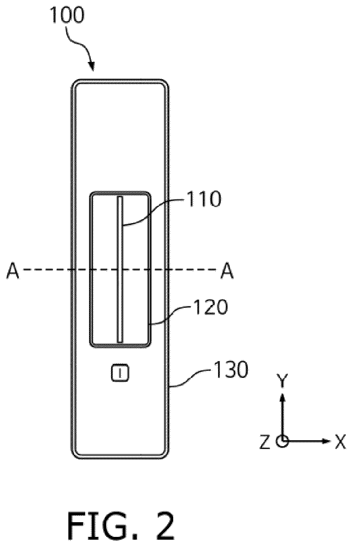

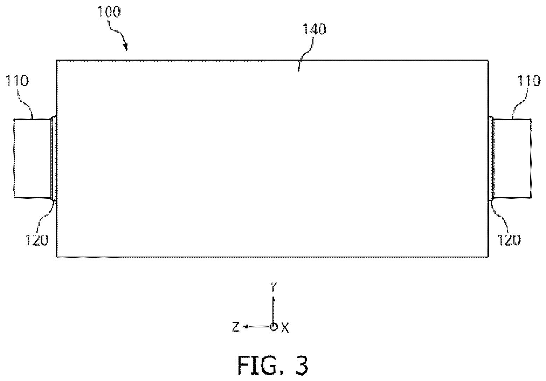

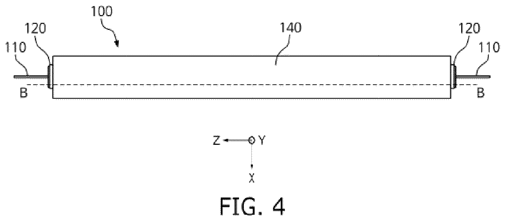

FIG. 1 illustrates a perspective diagram showing a secondary battery according to embodiments of the present disclosure, FIG. 2 illustrates a side diagram of the secondary battery according to embodiments of the present disclosure, FIG. 3 illustrates a front diagram of the secondary battery according to embodiments of the present disclosure, and FIG. 4 illustrates a plan diagram of the secondary battery according to embodiments of the present disclosure.

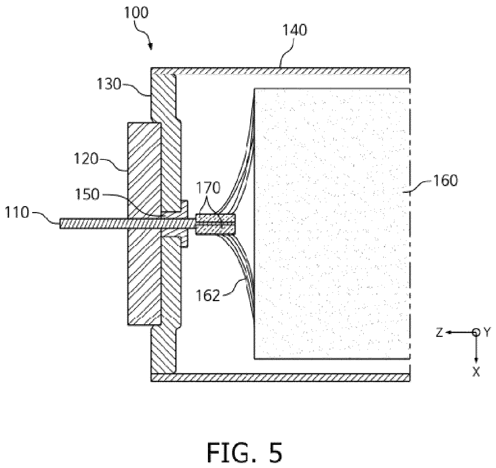

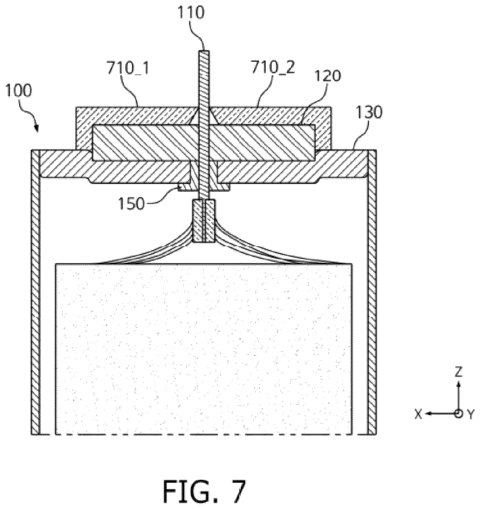

Referring to FIGS. 1 to 4, a secondary battery 100 may include subplates 110 each connected at a first end to a respective plurality of tabs of an electrode assembly (not shown), insulators 120 coupled to the subplates 110, cap plates 130 receiving the insulators 120 from the bottoms of the insulators 120, and a case 140. In some embodiments, the secondary battery 100 may further include a sealing part (not shown) disposed between the subplates 110 and the cap plates 130. An example of the sealing part will be described in detail later with reference to FIGS. 5 and 7.

The electrode assembly (not shown) may be received and accommodated in the case 140. An electrode assembly may be formed by winding or stacking a stack of a first electrode plate, a separator, and a second electrode plate, which are formed as thin plates or films. When the electrode assembly is a wound stack, a winding axis may be parallel to the longitudinal direction (e.g., the y direction) of the case. In some embodiments, the electrode assembly may be a stack type rather than a winding type, and the shape of the electrode assembly is not limited in the present disclosure. In some embodiments, the electrode assembly may be a Z-stack electrode assembly in which a positive electrode plate and a negative electrode plate are inserted into both sides of a separator, which is then bent into a Z-stack. In some embodiments, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. The reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first current collector. In some embodiments, when the first electrode plate is manufactured, the first electrode tab may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second current collector. In some embodiments, the second electrode tab may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab may be positioned on the left side of the electrode assembly, and the second electrode tab may be positioned on the right side of the electrode assembly. In some embodiments, the first electrode tab and the second electrode tab may be positioned on one side of the electrode assembly in the same direction. Herein, for ease of description, the left and right sides are defined according to the secondary battery as oriented in FIG. 1, and positions thereof may change in response to a case where the secondary battery is rotated left and right or up and down. In addition, the left and right sides may refer to the z-axis direction in FIGS. 1 to 4, but a direction toward the center of the secondary battery 100 may be referred to as downward and a direction away from the secondary battery 100 may be referred to as upward in order to indicate relative positions of the components.

In some embodiments, the subplates 110 may include a first subplate corresponding to a positive electrode and a second subplate corresponding to a negative electrode. Herein, a first end of each of the first subplate and the second subplate may be connected to a plurality of tabs of the electrode assembly received in the case 140. For example, the first subplate may be connected to a first electrode tab. Similarly, the second subplate may be connected to a second electrode tab. Herein, the tabs of the electrode assembly may be connected to the subplate 110 by laser welding or ultrasonic welding.

In some embodiments, each of the subplates 110 may extend through the corresponding insulator 120 and the corresponding cap plate 130. Specifically, the cap plate 130 may include a cap plate through-hole through which the subplate 110 extends. Similarly, the insulator 120 may include an insulator through-hole through which the subplate 110 extends. Accordingly, the subplate 110 may extend through the cap plate through-hole and the insulator through-hole, such that a second end of the subplate 110 is exposed to the outside of the insulator 120.

For example, the second end of the first subplate 110 may be exposed outwardly from the left side of the secondary battery 100, and the second end of the second subplate 110 may be exposed outwardly from the right side of the secondary battery 100. A busbar may be welded to the second end of such subplate 110 so as to be electrically connected to another secondary battery.

In some embodiments, the thickness of the subplate 110 may be constant. For example, the subplate 110 may have the shape of a plate. The thickness may refer to a dimension that is measured along the x-axis. Further, the thickness of each side of subplate 110 may be 0.5 mm to 1.0 mm, but is not limited thereto. In FIGS. 1 to 4, the subplate 110 is shown as having the shape of a rectangular plate, but is not limited thereto.

In some embodiments, the case 140 may include a first open area and a second open area opposite the first open area. In some embodiments, the cap plate 130 may include a first cap plate disposed over the first open area and a second cap plate disposed over the second open area. For example, the first cap plate may cover the first open area on the left side of the secondary battery 100, and the second cap plate may cover the second open area on the right side of the secondary battery 100.

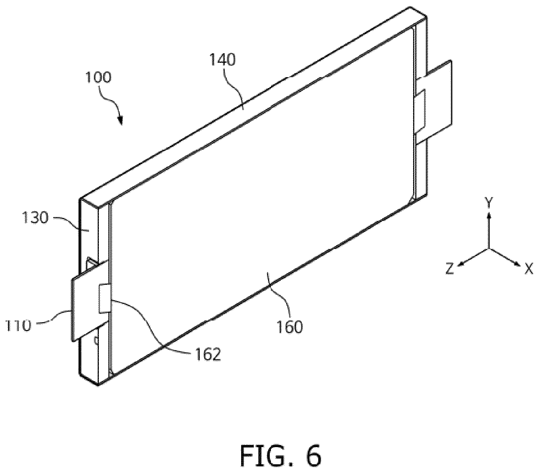

FIG. 5 illustrates an A-A cross-section of FIG. 2, and FIG. 6 illustrates a B-B cross-section of FIG. 4.

In some embodiments, the first end of the subplate 110 may be electrically connected to the electrode assembly 160. Specifically, the tabs 162 of the electrode assembly 160 may be electrically connected to the front and rear sides of the subplate 110. For example, the tabs 162 of the electrode assembly 160 may be laser welded or ultrasonically welded to welding areas 170 of the subplate 110. Accordingly, the subplate 110 may contact the connected plurality of tabs 162 to represent a positive electrode or a negative electrode.

In some embodiments, the secondary battery 100 may include a sealing part 150 disposed between the subplate 110 and the cap plate 130. Specifically, the sealing part 150 may include a third through-hole through which the subplate 110 extends. In some embodiments, the inner surface of the third through-hole of the sealing part 150 may be coupled to an intermediate portion of the subplate 110. In some embodiments, the sealing part 150 may be coupled to the inner surface of the cap plate through-hole of the cap plate 130. Accordingly, the sealing part 150 may provide a seal between the subplate 110 and the cap plate 130.

In some embodiments, at least a portion of the cap plate 130 may be recessed. Specifically, a first portion of the cap plate 130 may be inwardly recessed. Additionally, the bottom surface of the insulator 120 may be coupled to the top surface of the first portion of the cap plate 130. In some embodiments, the area of the top surface of the first portion of the cap plate 130 may be the same as or similar to the area of the bottom surface of the insulator 120. In some embodiments, at least a portion of the lower surface of the insulator 120 may be in contact with at least a portion of the cap plate 130.

The subplate may form a press fit connection with the through-hole of the cap plate 130, the third through-hole of the sealing part 150 and/or the through-hole of the insulator 120.

In some embodiments, the subplate 110 may include an electrically conductive material (e.g., copper (Cu)). Further, the cap plate 130 may be formed of aluminum (Al), but is not limited thereto. The sealing part 150 may include an insulating material (e.g., ethylene propylene diene monomer (EPDM)). The insulator 120 may also include an insulating material (e.g., polycarbonate (PC)).

With this configuration, components such as terminal plates, rivets, current collectors, and sub-tabs may be eliminated when compared to a conventional side terminal cell. Accordingly, the resistance of the components may be reduced, which may improve the performance of the secondary battery. Furthermore, the cost of manufacturing the secondary battery may be reduced as the number of components for manufacturing the secondary battery is reduced by simplifying the components within the secondary battery. In addition, the productivity of the secondary battery may be improved because the process of welding the current collector and the sub-tabs may not be necessary.

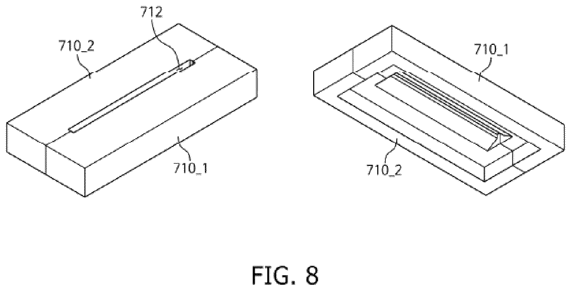

FIG. 7 illustrates an example of coupling the insulator 120 of the secondary battery 100 according to embodiments of the present disclosure, and FIG. 8 illustrates an example of molds 710_1 and 710_2 used in the coupling of the insulator 120.

In some embodiments, the insulator 120 may be coupled to the subplate 110, the cap plate 130, and the sealing part 150. For example, the insulator 120 may include an insulator through-hole through which the subplate 110 extends. Herein, the inner surface of the insulator through-hole may be coupled to an intermediate portion of the subplate 110. Further, the lower surface of the insulator 120 may be coupled to the upper surface of the cap plate 130 and the upper surface of the sealing part 150. Herein, the upper surface and the lower surface are determined for ease of description with respect to the secondary battery 100 in FIG. 7. The term "lower" may indicate an inward direction of the secondary battery 100 and the term "upper" may indicate an outward direction of the secondary battery 100, and positions thereof may change in response to a case where the secondary battery is rotated to left and right or up and down.

In some embodiments, the insulator 120 may be coupled to a recessed first portion of the cap plate 130 by an injection process. For example, the molds 710_1 and 710_2 including an internal hollow space corresponding to the insulator 120 may be fixed to a non-recessed second portion of the cap plate 130. Herein, the molds 710_1 and 710_2 may include a through-hole 712 through which the subplate 110 extends. Thereafter, the insulator 120 may be coupled to the top surface of the first portion of the cap plate 130 and the top surface of the sealing part 150 using the molds 710_1 and 710_2 by an injection process. Subsequently, the first mold 710_1 and the second mold 710_2 may be separated and removed in opposite directions. The insulator 120 is described as being coupled by the injection process with reference to FIGS. 7 and 8, but the present disclosure is not limited thereto, and may be coupled by various coupling methods.

In some embodiments, the top surface of the second portion of the cap plate 130 may be formed higher than the top surface of the first portion of the cap plate 130. In some embodiments, the top surface of the insulator 120 may be formed higher than the top surface of the second portion. In some embodiments, the second end of the subplate 110 protruding outward may be formed higher than the top surface of the insulator 120.

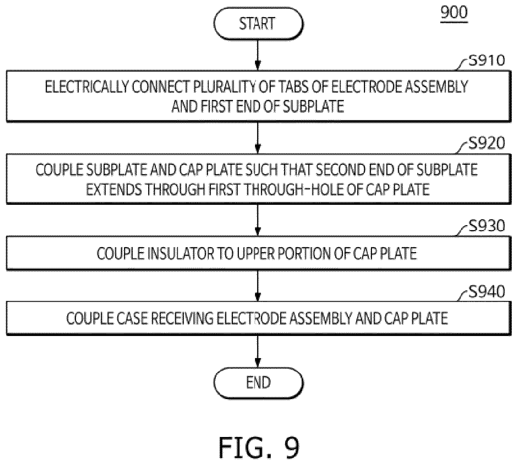

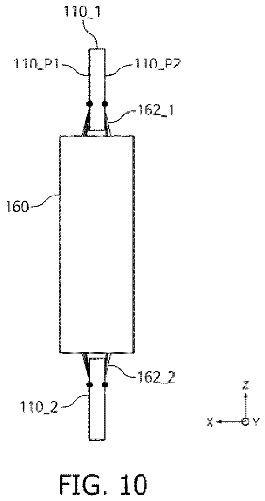

FIG. 9 illustrates a flowchart showing an example of a method of manufacturing a secondary battery (hereinafter, referred to as the "secondary battery manufacturing method") 900 according to embodiments of the present disclosure, and FIGS. 10 to 15 illustrate schematic diagrams showing example steps of the secondary battery manufacturing method 900.

The secondary battery manufacturing method 900 may be started by electrically connecting a plurality of tabs of an electrode assembly with a first end of a subplate in S910. In some embodiments, referring to FIG. 10, a plurality of first tabs 162_1 of the electrode assembly 160 may be connected to a front side 110_P1 and a back side 110_P2 of a first subplate 110_1. In other words, the plurality of first tabs 162_1 of the electrode assembly 160 may be connected to a front surface 110_P1 and a rear surface 110_P2 of the first subplate 110_1. Herein, the first tabs 162_1 of the electrode assembly 160 may be electrically connected to the first subplate 110_1 by laser welding, ultrasonic welding, or the like. Similarly, a second subplate 110_2 may also be connected to a plurality of second tabs 162_2 of the electrode assembly 160. In some embodiments, the first subplate 110_1 may correspond to a positive/negative electrode, and the second subplate 110_2 may correspond to a negative/positive electrode. Herein, the front surface of the front side and the rear surface of the rear side are determined for ease of description with respect to the secondary battery in FIGS. 10 to 15. The front surface and the rear surface may be determined in the X-axis direction, and the top surface and the rear surface may be determined in the Z-axis direction, and the positions thereof may change in response to a case where the secondary battery is rotated left and right or up and down.

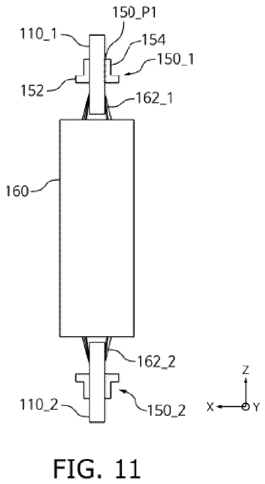

Thereafter, the sealing part may be disposed to surround an intermediate portion of the subplate. In some embodiments, referring to FIG. 11, a first sealing portion 150_1 may include a through-hole through which the first subplate 110_1 extends. In some embodiments, the inner surface 150_P1 of the through-hole may be coupled to an intermediate portion of the first subplate 110_1. The first sealing portion 150_1 may include a base 152 and a protrusion 154 projecting upwardly from the base 152. In some embodiments, the base 152 and the protrusion 154 may form a stepped portion. The through-hole may be formed continuously to penetrate the base 152 and the protrusion 154 together.

A second sealing portion 150_2 may have a structure symmetrical with respect to the first sealing portion 150_1. Similar to the first sealing portion 150_1, the second sealing portion 150_2 may also be coupled to the second subplate 110_2. Herein, the direction in which the second sealing portion 150_2 is coupled to the second subplate 110_2 may be symmetrical with respect to the direction in which the first sealing portion 150_1 is coupled to the first subplate 110_1 with respect to the center of the secondary battery.

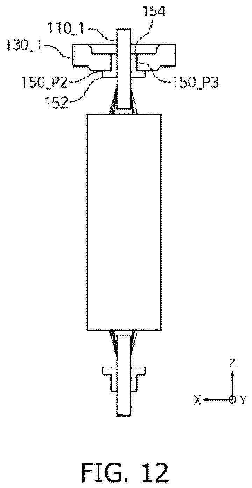

Thereafter, the subplates 110_1, 110_2 may be coupled to the cap plates, respectively, such that the second ends of the subplates 110_1, 110_2 extend through the cap plate through-holes of the cap plates, respectively, in S920. In some embodiments, referring to FIG. 12, the inner surface of the cap plate through-hole of a first cap plate 130_1 may be coupled to the outer surface 150_P3 of the protrusion 154 of the first sealing portion 150_1. In some embodiments, the lower surface of the first cap plate 130_1 may be coupled to the top surface 150_P2 of the base 152 of the first sealing portion 150_1. Accordingly, the first subplate 110_1, the first sealing portion 150_1, and the first cap plate 130_1 may be coupled to each other. In addition, the first sealing portion 150_1 may provide a seal between the first subplate 110_1 and the first cap plate 130_1.

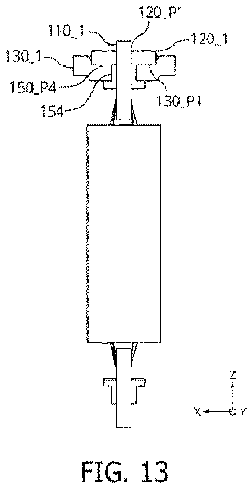

Thereafter, an insulator may be coupled to the upper portion of the cap plate 130_1 in S930. In some embodiments, referring to FIG. 13, a first insulator 120_1 may be coupled to the upper portion of the first cap plate 130_1. In some embodiments, the bottom surface of the first insulator 120_1 may be coupled to the top surface 130_P1 of the first cap plate 130_1 and to the top surface 150_P4 of the protrusion 154 of the first sealing portion 150_1. In addition, the first insulator 120_1 may include an insulator through-hole through which the first subplate 110_1 extends. In some embodiments, the inner surface 120_P1 of the insulator through-hole may be coupled to an intermediate portion of the first subplate 110_1. The first insulator 120_1 may be coupled to the first cap plate 130_1 by an injection process, but is not limited thereto. Herein, the top surface of the first subplate 110_1 may be formed higher than the top surface of the first insulator 120_1.

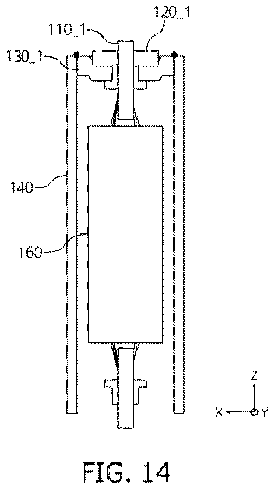

Thereafter, the case receiving the electrode assembly and the cap plates may be coupled together. In some embodiments, referring to FIG. 14, the first cap plate 130_1 and the case 140 may be coupled together by, for example, welding. Herein, the case 140 may receive the electrode assembly 160 and may include a first open area and a second open area opposite the first open area. The first cap plate 130_1 may be coupled to the case 140 so as to be disposed over the first open area.

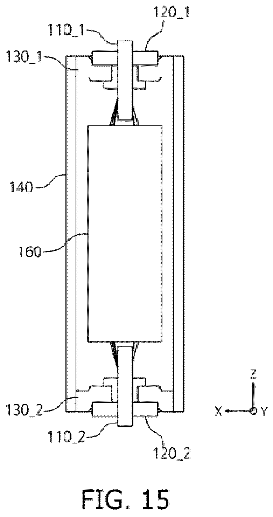

In some embodiments, referring to FIG. 15, similar to the first subplate 110_1 being coupled to the first cap plate 130_1 and the first insulator 120_1, the second subplate 110_2 may be coupled to a second cap plate 130_2 and a second insulator 120_2. Herein, the direction in which the second subplate 110_2 is coupled to the second cap plate 130_2 and the second insulator 120_2 and the direction in which the first subplate 110_1 is coupled to the first cap plate 130_1 and the first insulator 120_1 may be symmetrical with respect to the center of the secondary battery. In some embodiments, by coupling the second cap plate 130_2 to the case 140, a secondary battery may be produced.

Although the present disclosure has been described above with respect to embodiments thereof, the present disclosure is not limited thereto. Various modifications and variations can be made thereto by those skilled in the art within the present disclosure and the equivalent scope of the appended claims.

## Claims

1. A secondary battery (100) comprising:
a subplate (110, 110_1, 110_2) connected at a first end of the subplate (110, 110_1, 110_2) to a plurality of tabs (162, 162_1, 162_2) of an electrode assembly (160);
an insulator (120, 120_1, 120_2) coupled to the subplate (110); and
a cap plate (130, 130_1, 130_2) configured to receive a bottom portion of the insulator (120, 120_1, 120_2),
wherein the subplate (110, 110_1, 110_2) extends through the insulator (120, 120_1, 120_2) and the cap plate (130, 130_1, 130_2) to expose a second end of the subplate (110, 110_1, 110_2) to outside of the of the secondary battery (100).

2. The secondary battery (100) as recited in claim 1, wherein a side of the subplate (110, 110_1, 110 2) has a thickness of 0.5 mm to 1.0 mm.

3. The secondary battery (100) as recited in claim 1 or 2, wherein the thickness of the subplate (110, 110_1, 110_2) is constant.

4. The secondary battery (100) as recited in any one of claims 1 to 3, wherein the tabs (162, 162_1, 162_2) of the electrode assembly (160) are electrically connected to the subplate (110, 110_1, 110_2) by laser welding or ultrasonic welding.

5. The secondary battery (100) as recited in any one of claims 1 to 4, wherein the tabs (162, 162_1, 162_2) of the electrode assembly (160) are connected to a front surface (110_P1) and/or a rear surface (110_P2) of the subplate (110, 110_1, 110_2).

6. The secondary battery (100) as recited in any one of claims 1 to 5, wherein the cap plate (130, 130_1, 130_2) comprises a cap plate through-hole through which the subplate (110, 110_1, 110_2) extends.

7. The secondary battery (100) as recited in any one of claims 1 to 6, wherein the insulator (120, 120_1, 120_2) comprises an insulator through-holethrough which the subplate (110, 110_1, 110_2) extends.

8. The secondary battery (100) as recited in any one of claims 1 to 7, wherein a lower surface of the insulator (120, 120_1, 120_2) is coupled to an upper surface of the cap plate (130, 130_1, 130_2), and/or
wherein an inner surface (120_P1) of the insulator through-hole is coupled to an intermediate portion of the subplate (110, 110_1, 110_2).

9. The secondary battery (100) as recited in any one of claims 1 to 8, further comprising a sealing part (150, 150_1, 150_2) positioned between the subplate (110, 110_1, 110_2) and the cap plate (130, 130_1, 130_2).

10. The secondary battery (100) as recited in any one of claims 1 to 9, wherein the second end of the subplate (110, 110_1, 110_2) is positioned higher than a top surface of the insulator (120, 120_1, 120_2).

11. The secondary battery (100) as recited in any one of claims 1 to 10, further comprising:
a sealing part (150, 150_1, 150_2) positioned between the subplate (110, 110_1, 110_2) and the cap plate (130, 130_1, 130_2); and
a case (140) configured to receive the electrode assembly (160), the case (140) comprising a first open area and a second open area opposite the first open area,
wherein the cap plate (130, 130_1, 130_2) comprises a first cap plate (130_1) disposed over the first open area and a second cap plate (130_2) disposed over the second open area.

12. The secondary battery (100) as recited in any one of claims 1 to 11, wherein the subplate (110, 110_1, 110_2) comprises a first subplate (110_1) comprising a first end and a second end, the first subplate (110_1) corresponding to a positive electrode, and a second subplate (110_2) comprising a first end and a second end, the second subplate (110_2) corresponding to a negative electrode, and
wherein the first end of the first subplate (110_1) is connected to corresponding tabs (162, 162_1) of the tabs (162, 162_1, 162_2) of the electrode assembly (160) and the first end of the second subplate (110_2) is connected to corresponding tabs (162, 162_2) of the tabs (162, 162_1, 162_2) of the electrode assembly (160).

13. The secondary battery (100) as recited in claim 11 and 12, wherein the second end of the first subplate (110_1) is exposed to outside of the secondary battery (100) and the first subplate (110_1) extends through a first insulator (120_1) that is received in the first cap plate (130_1), and
wherein the second end of the second subplate (110_2) is exposed to outside of the secondary battery (100) and the second subplate (110_2) extends through a second insulator (120_2) that is received in the second cap plate (130_2).

14. A method of manufacturing a secondary battery (100), the method comprising:
connecting a plurality of tabs (162, 162_1, 162_2) of an electrode assembly (160) to a first end of a subplate (110, 110_1, 110_2);
coupling the subplate (110, 110_1, 110_2) to a cap plate (130, 130_1, 130_2) so that the subplate (110, 110_1, 110_2) extends through a cap plate through-hole;
coupling an insulator (120, 120_1, 120_2) to an upper portion of the cap plate (130, 130_1, 130_2); and
coupling a case (140) receiving the electrode assembly (160) to the cap plate (130, 130_1, 130_2).

15. The method as recited in claim 14, wherein the second end of the subplate (110, 110_1, 110_2) is positioned higher than a top surface of the insulator (120, 120_1, 120_2).
